# EUROPÄISCHE PATENTANMELDUNG

(11) **EP 4 631 700 A1**
(43) Veröffentlichungstag der Anmeldung: **15.10.2025**
(21) Anmeldenummer: 25165073.5
(22) Anmeldetag: 20.03.2025
(51) Int. Cl.: B29C 65/02, B29C 65/00, B29C 65/10, B29C 65/18, B29L 31/00

(54) **EINRICHTUNG EINER VORRICHTUNG ZUM VERSCHWEISSEN UND/ODER VERSIEGELN VON SCHLAUCHBEUTELN SOWIE VERFAHREN ZUM ÜBERPRÜFEN DER WIRKFUNKTION EINER SIEGELBACKE EINER SCHWEISSEINRICHTUNG**

(30) Priorität: 25.03.2024 DE 102024108385; 08.08.2024 DE 102024122693
(71) Anmelder: Baumann Maschinenbau Solms GmbH & Co. KG, 35606 Solms (DE)
(72) Erfinder: Reiter, Georg Philipp, 35792 Löhnberg (DE)
(74) Vertreter: Stoffregen, Hans-Herbert

(57) **Zusammenfassung**

Die Erfindung bezieht sich auf ein Verfahren und eine Vorrichtung zum Verschweißen von Schlauchbeuteln, umfassend eine auf ein Formatrohr der Vorrichtung anlegbare Schweißeinrichtung 32 sowie eine Halterung 38 für diese. Die Schweißeinrichtung ist mit der Halterung verbunden, wobei zwischen der Schweißeinrichtung und der Halterung ein Sensor 54 zur Messung der auf die erste Halterung einwirkenden Kraft vorhanden ist,

## Beschreibung

Die Erfindung bezieht sich auf eine Einrichtung einer Vorrichtung zum Verschweißen bzw. Versiegeln von Schlauchbeuteln, umfassend eine auf ein Formatrohr der Vorrichtung anlegbare Schweißeinrichtung, wie Längssiegelschweißeinrichtung, sowie eine erste Halterung für diese.

Auch nimmt die Erfindung Bezug auf ein Verfahren zum Überprüfen der Wirkfunktion einer Siegelbacke einer Schweißeinrichtung in Bezug auf ein Formatrohr einer vertikalen Schlauchbeutelmaschine, wobei die Schweißeinrichtung mit einer ersten Halterung verbunden ist, mittels der die Siegelbacke zu dem Formatrohr verstellt wird.

Um Schlauchbeutel aus Folienbahnen herzustellen, ist es bekannt, die Folienbahnen über eine Formschulter in einen Folienschlauch umzuformen, der um ein vertikal verlaufendes Formatrohr gelegt wird, um sodann die überlappenden Bereiche mittels einer in Längsachsenrichtung des Formatrohrs verlaufenden Siegelbacke einer Längssiegelschweißeinrichtung zu verschweißen. Das Anlegen der Siegelbacke an die zu verschweißenden Folienränder erfolgt häufig von Hand, so dass in Abhängigkeit von dem über die Siegelbacke auf die Folienränder einwirkenden Druck unterschiedliche Schweißergebnisse erzielt werden.

Eine Schlauchbeutelmaschine mit Formschulter, Formatrohr und Schweißeinrichtung ist z.B. der EP 1 745 914 B1 zu entnehmen.

Die CN 103895891 A bezieht sich auf eine vertikale Schlauchbeutelmaschine, mit der überlappende Ränder eines Schlauches mittels einer Siegeleinheit verschweißt werden. Um einen gewünschten Druck bzw. konstanten Druck auf die zu versiegelnden Ränder ausüben zu lassen, ist gegenüberliegend zu der Siegeleinheit ein Abstützelement vorgesehen, das in Form eines Abstützrades oder eines oder mehrerer Gleitelemente zu einem Formatrohr hin ziehbar ist.

Gegenstand der DE 197262051 ist eine Vorrichtung zum Verschweißen einer Längsnaht und zum Weitertransport einer Folienbahn. Dabei soll die Vorrichtung für druck- und wärmeempfindliches Füllgut geeignet sein. Hierzu wirken Schweißdruck und Schweißwärme derart gegen ein Formatrohr, dass das Füllgut erst mit einer abgekühlten Längssiegelnaht eines Folienschlauchs in Kontakt gelangt.

Gegenstand der JP 2009-67459 A ist eine Verpackungsmaschine zum Füllen von Flüssigkeiten. Hierzu werden zwei streifenförmige Laminate durch Heißluft verbunden.

Die WO 2010/004050 A1 bezieht sich auf eine Verpackungsmaschine zur Herstellung schlauchförmiger Produkte. Zur Herstellung werden Druckrollen benutzt, wobei mit den Druckrollen Sensoren verbunden sind, um den beim Siegeln einwirkenden Druck zu messen.

Aufgabe der vorliegenden Erfindung ist es, eine Einrichtung sowie ein Verfahren der eingangs genannten Art so weiterzubilden, dass reproduzierbare Schweißergebnisse erzielbar sind.

Nach einem weiteren Aspekt soll die Möglichkeit gegeben werden zu überprüfen, ob für zu herstellende Beutel ein hierfür bestimmtes Formatrohr zum Einsatz gelangt.

Nach einem weiteren Aspekt der Erfindung soll sichergestellt sein, dass ein unkontrolliertes Berühren der Siegelfläche der Siegelbacke ausgeschlossen ist.

Zur Lösung zumindest einer der zuvor genannten Aspekte sieht die Erfindung im Wesentlichen vor, dass der ersten Halterung oder einen die Schweißeinrichtung mit der ersten Halterung verbindendes Verbindungselement ein zur Messung der auf die Halterung bzw. das Verbindungselement einwirkenden Kraft bestimmbarer Sensor zugeordnet ist.

Eine Einrichtung der eingangs genannten Art zeichnet sich insbesondere dadurch aus, dass die Schweißeinrichtung oder ein von der Schweißeinrichtung ausgehendes Verbindungselement mit der ersten Halterung verbunden ist, dass zwischen der Schweißeinrichtung oder dem Verbindungselement und der ersten Halterung ein Sensor zur Messung der auf die erste Halterung oder das Verbindungselement vorzugsweise einwirkenden Kraft vorhanden ist, wobei die Schweißeinrichtung oder das Verbindungselement über eine den Sensor aufweisende Schnellspannvorrichtung mit Spannstück verbunden ist.

Insbesondere zeichnet sich die Einrichtung der eingangs genannten Art auch dadurch aus, dass zum Verstellen der ersten Halterung diese mit einem Linearantrieb verbunden ist, und dass der ersten Halterung oder einem die Schweißeinrichtung mit der ersten Halterung verbindenden Verbindungselement ein zur Messung der auf die Halterung oder das Verbindungselement einwirkenden Kraft bestimmbarer Sensor zugeordnet ist.

Erfindungsgemäß wird reproduzierbar die über die Schweißeinrichtung auf das Formatrohr bzw. auf die entlang diesem geführte und zu verschweißende Folie einwirkende Kraft bestimmt, so dass reproduzierbare Schweißergebnisse erzielbar sind. Sollte die einwirkende Kraft bzw. der Druck außerhalb eines Soll-Wertbereichs liegen, wird die Schweißeinrichtung in ihrer Position zum Formatrohr verändert, um den gewünschten Wert zu erzielen.

Hierzu ist insbesondere vorgesehen, dass die erste Halterung über einen Linearantrieb verstellbar ausgebildet ist.

Dabei kann der Linearantrieb von einer zweiten Halterung ausgehen, die in ortsfester Beziehung zu dem Formatrohr steht. Hierdurch ergibt sich der Vorteil, dass mittels des Linearantriebs die Positionen der Schweißeinrichtung beim Anliegen an dem Rohr ermittelt und somit der Durchmesser des Formatrohrs bestimmt werden kann. Somit ist ausgeschlossen, dass vom Durchmesser nicht geeignete Formatrohre für zu schweißende Folienbahnen zum Einsatz gelangen.

Eigenerfinderisch ist insbesondere vorgesehen, dass die Schweißeinrichtung bzw. das Verbindungselement mit der ersten Halterung über eine den Sensor, wie Kraftsensor, aufweisende Schnellspannvorrichtung mit Spannstück verbunden ist, wobei der Sensor vorzugsweise in dem Spannstück integriert ist.

Auf einfache Weise ist die Schweißeinrichtung mit der ersten Halterung verbindbar, wobei der Sensor, wie Kraftsensor, in der Schnellspannvorrichtung integriert ist, um die auf die Folien bzw. das Formatrohr einwirkende Kraft zu ermitteln.

Um problemlos das Formatrohr zugänglich zu machen, ohne dass durch die Schweißeinrichtung eine Behinderung erfolgt, sieht die Erfindung auch vor, dass die Schweißeinrichtung, ggf. über das Verbindungselement, mit der ersten Halterung verschwenkbar verbunden ist.

Um die langgestreckte, linien- oder streifenförmige vorzugsweise elektrisch geheizte Siegelbacke bzw. deren Siegelfläche gegen ein unkontrolliertes Berühren zu sichern, sieht ein eigenerfinderischer Lösungsvorschlag vor, dass zumindest zu einer Seite, insbesondere zu beiden Seiten der Siegelbacke in Längsrichtung dieser ein Schutzelement, wie Schutzklappe, verläuft.

Dabei ist insbesondere vorgesehen, dass zum Freigeben der Siegelbacke bzw. deren Siegelfläche das Schutzelement sowohl schwenkbar als auch translatorisch bewegbar ausgebildet ist.

Konstruktiv ist dabei insbesondere hervorzuheben, dass der Siegelbacke ein Seitenwandungen aufweisendes Schutzgehäuse zugeordnet ist, dass jeweils ein Schutzelement mit einer der Seitenwandungen verbunden ist und dass das Schutzgehäuse über einen Antrieb, wie Pneumatikzylinder, relativ zu der Siegelbacke verstellbar, wie zurückziehbar, ausgebildet ist, wobei beim Verstellen, wie dem Zurückziehen, die Schutzelemente zum Freigeben der Siegelbacke bzw. deren Siegelfläche voneinander weg verschwenkbar ausgebildet sind.

Aufgrund der erfindungsgemäßen Lehre ist sichergestellt, dass konstante Schweißergebnisse erzielbar sind. Dies gilt auch dann, wenn sich z.B. das Formatrohr in seiner Position verschieben würde oder Folien abweichender Dicke zu schweißen sind, ohne dass der Nutzer händisch eingreifen muss, um ein ordnungsgemäßes Anlegen der Siegelbacke sicherzustellen. Vielmehr stellt der Sensor entsprechende Veränderungen fest, so dass entsprechend die Schweißeinrichtung automatisch verstellt werden kann.

Es ist auch feststellbar, ob entlang des Formatrohrs eine Folie gefördert wird, die zu verschweißen bzw. zu versiegeln ist, da bei nicht vorhandener Folie sich der Druckwert ändert.

Des Weiteren kann überprüft werden, ob die Schweißeinrichtung mit der ersten Halterung ordnungsgemäß verbunden ist.

Sollte eine zu transportierende Folie abgerissen sein, wird dies erfasst, da sich aufgrund der fehlenden Folie die Druckbeaufschlagung auf das Formatrohrs verändert. Somit können Fehlermeldungen generiert werden, wodurch sichergestellt ist, dass nötige Auszeiten bei der Nutzung der entsprechenden Maschine vermieden werden.

Durch die erfindungsgemäße Lehre kann auch eine Formatrohrsuche verwirklicht werden, da durch die ortsfeste Beziehung zwischen der zweiten Halterung und der Längsachse des Formatrohrs der Durchmesser des Formatrohrs ermittelt werden kann, sobald die Schweißeinrichtung bzw. die Siegelfläche der Siegelbacke an dem Formatrohr anliegt. Hierdurch wird die Möglichkeit eines automatischen Wechsels von Formatrohren eröffnet.

Dies wird insbesondere dadurch ermöglicht, dass die erste Halterung mittels eines Linearantriebs verstellbar ist, der von der zweiten Halterung ausgeht.

Ein Verfahren zum Überprüfen der Wirkfunktion einer Siegelbacke einer Schweißeinrichtung in Bezug auf ein Formatrohr einer vertikalen Schlauchbeutelmaschine, wobei die Schweißeinrichtung mit einer ersten Halterung verbunden ist, mittels der die Siegelbacke zu dem Formatrohr verstellt wird, zeichnet sich dadurch aus, dass auf ein die Schweißeinrichtung mit der ersten Halterung verbindendes Verbindungselement oder die erste Halterung einwirkende Kraft mittels eines Sensors ermittelt wird und in Abhängigkeit von der ermittelten Kraft die Wirkfunktion der Siegelbacke bewertet wird.

Dabei ist insbesondere vorgesehen, dass das Verbindungselement über einen den Sensor aufweisenden Schnellspannverschluss mit der ersten Halterung verbunden wird.

Um die Schweißeinrichtung zu einem Formatrohr problemlos verstellen zu können, ist insbesondere vorgesehen, dass die erste Halterung über einen Linearantrieb, wie Spindel, zu dem Formatrohr verstellt wird.

Die Erfindung zeichnet sich des Weiteren dadurch aus, dass in Abhängigkeit von der gemessenen Kraft bzw. dem Druck die Siegelbacke zu dem Formatrohr verstellt und bei Anliegen an dem Formatrohr die über die Siegelbacke auf das Formatrohr einwirkende Kraft bzw. der Druck gemessen und auf einen Sollwert eingestellt wird. Liegt eine Abweichung vom Soll-Wert vor, kann ein automatisches Verstellen der Schweißeinrichtung mit der Siegelbacke erfolgen, bis der gemessene Ist-Wert dem Sollwert entspricht bzw. der Ist-Wert innerhalb eines Sollwertbereichs liegt.

Um den Durchmesser des zum Einsatz gelangenden Formatrohrs zu bestimmen, ist vorgesehen, dass bei Anliegen der Siegelbacke an dem Formatrohr die Position der Siegelbacke in Bezug auf Mittelachse des Formatrohrs durch die Position der ersten Halterung zu der zweiten Halterung ermittelt wird. Hierzu geht insbesondere von der zweiten Halterung ein Linearantrieb aus, mit dem die erste Halterung verbunden ist.

Insbesondere zeichnet sich die Erfindung dadurch aus, dass von dem Sensor generierte kraft- bzw. druckabhängige Signale einer Steuerung zugeführt werden, mittels der
- die Position der Siegelbacke zu dem Formatrohr und/oder
- die Position der Schweißeinrichtung in Bezug auf die erste Halterung und/oder
- bei an dem Formatrohr anliegender Siegelbacke fehlerhaft zugeführtes oder zumindest teilweise fehlendes zu schweißendes Folienmaterial
ermittelt werden.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines bevorzugten Ausführungsbeispielen.

Es zeigen:

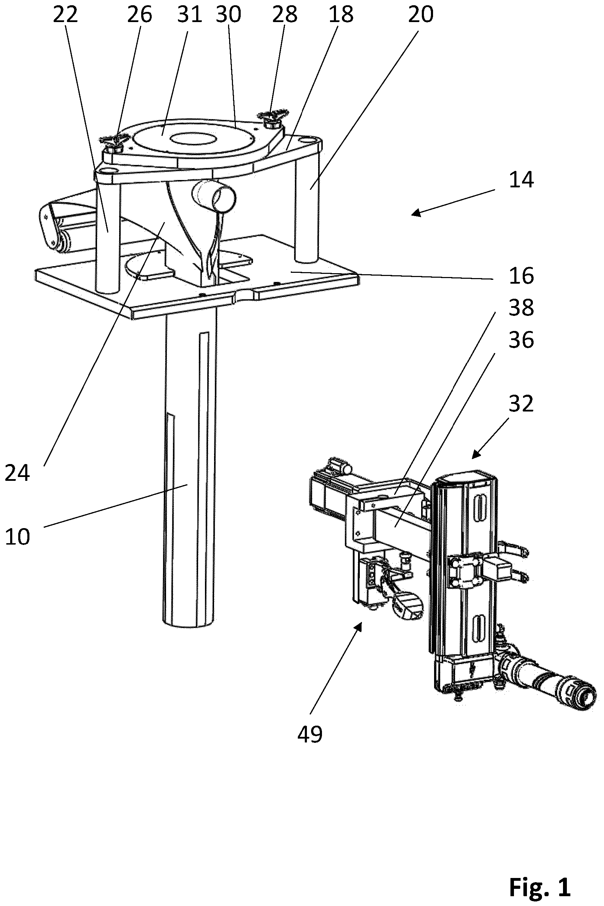

- Fig. 1: Formatrohr mit Formatrohrträger und Schweißeinrichtung einer Vertikalschlauchbeutelmaschine,

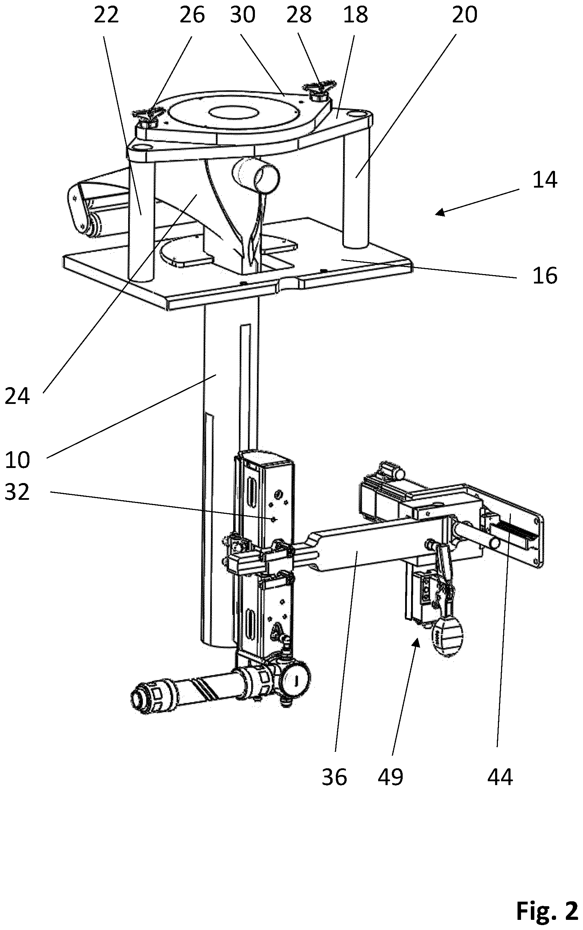

- Fig. 2: die Schweißeinrichtung gem. Fig. 1 in Arbeitsposition zu dem Formatrohr,

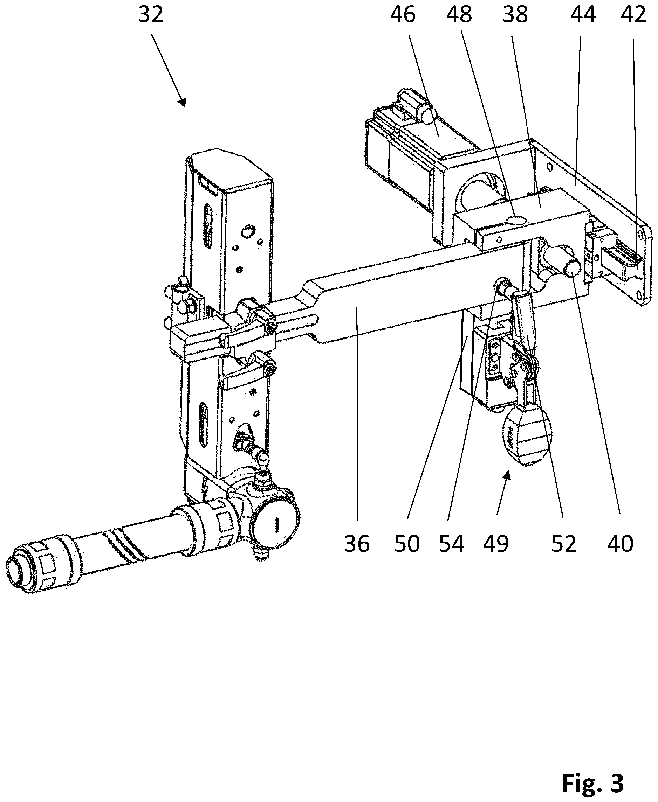

- Fig. 3: die Schweißeinrichtung gem. Fig. 1 und 2 mit einer ersten und einer zweiten Halterung,
- Fig. 4: die Schweißeinrichtung in Bezug auf das Formatrohr in Parkposition,
- Fig. 5: die Schweißeinrichtung in an dem Formatrohr anliegender Position,

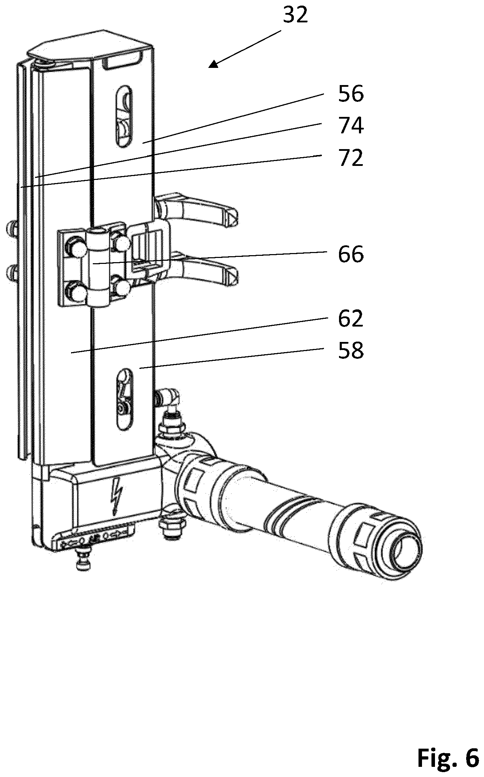

- Fig. 6: die Schweißeinrichtung mit Schutzeinrichtung in vergrößerter Darstellung,
- Fig. 7: die Schweißeinrichtung bei geschützter Siegelbacke und
- Fig. 8: die Schweißeinrichtung bei von der Schutzeinrichtung freigegebener Siegelbacke.

In den Fig. sind Ausschnitte einer Vertikalschlauchbeutelmaschine dargestellt, in der eine ebene Folienbahn zu einem Folienschlauch umgeformt wird, der sowohl in Längsrichtung als auch in beabstandet zueinander verlaufenden Bereichen in Querrichtung versiegelt bzw. verschweißt wird.

Wesentliche Bauelemente der Schlauchbeutelmaschine sind ein Formatrohr 10, das von einem Formatrohrträger 14 ausgeht, der im Ausführungsbeispiel aus einer Formatunterplatte 16 und einer Formatoberplatte 18 besteht, die über Abstandselemente in Form von insbesondere Stehbolzen 20, 22 miteinander verbunden sind.

Eine Formatschulter 24 ist mit der Formatunterplatte 16 verbunden, die zur Justage zu dem Formatrohr 10 zu verstellen ist, damit die Formatschulter 24 äquidistant mit einem Spaltmaß von z.B. 1 mm oder weniger das Formatrohr 10 umgeben kann.

Um ein Ein- und Ausbau des Formatrohrs 10 zu ermöglichen, ohne dass das Ursprungsspaltmaß zu der Schulter 24 verändert wird, kann vorgesehen sein, dass das Formatrohr 10 über ein Nullpunktspannsystem mit dem Formatrohrträger 14 verbunden ist. Das Nullpunktspannsystem weist Spannbolzen 26, 28 auf, die von einem Plattenelement 30 ausgehen, das mit der Formatoberplatte 18 verbunden wird, die das Spannmodul des Nullpunktspannsystems bildet.

Somit ist sichergestellt, dass das Plattenelement 30 wiederholgenau in exakter Position mit dem Formatrohrträger 14 verbunden wird, wobei eine Wiederholgenauigkeit von weniger als 20 µm, insbesondere weniger als 10 µm, erzielt wird. Voraussetzung hierfür ist, dass das Formatrohr 10 fest mit dem Plattenelement 30 verbunden ist, z.B. über eine vom Endbereich des Formatrohrs 10 ausgehende Flanschplatte 31.

Um einen entlang des Formatrohrs 10 geführten Folienschlauch verschweißen bzw. zu versiegeln zu können, wird eine Folie von einer Vorratsrolle abgerollt, über die Formschulter 24 gezogen und dabei in den gewünschten Folienschlauch umgeformt, so dass dessen überlappende Ränder mittels einer Schweißeinrichtung 32 und zwar mittels dessen langgestreckter linien- bzw. streifenförmiger Siegelbacke 34, und zwar mittels einer Siegelfläche, die die Stirnfläche der Siegelbacke 34 ist, zu verschweißen.

Die Schweißeinrichtung 32 geht von einem als ein Bügel zu bezeichnendes Verbindungelement 36 aus, das seinerseits von einer ersten Halterung 38 ausgeht, die ihrerseits über eine Spindel 40 entlang einer Führung 42 einer zweiten Halterung 44 verstellbar ist. Die Spindel 40 wird mittels eines Antriebs 46, wie Elektromotor, in Drehbewegung versetzt, wobei der Antrieb 46 mit der zweiten Halterung 44 verbunden ist.

Wie sich insbesondere aus den Fig. ableiten lässt, ist der Bügel 36 verschwenkbar mit der ersten Halterung 38 verbunden, wie der von dem Bügel 36 ausgehende Zapfen 48 vermittelt, der in der ersten Halterung 38 drehbar gelagert ist.

Die Verbindung zwischen dem Bügel 36 und der ersten Halterung 38 erfolgt über einen Schnellspannverschluss 49, in dem ein Kraftsensor integriert ist, um die Kraft bzw. den Druck zu ermitteln, der von der Schweißeinrichtung 32, also dessen als Längselektrode zu bezeichnende Siegelbacke 34 auf das Formatrohr 10 einwirkt.

Die Siegelbacke wird insbesondere unmittelbar elektrisch geheizt.

Eine mittelbare elektrische Heizung ist gleichfalls möglich.

Zum Schweißen könnte auch über die Siegelbacke applizierte Heißluft benutzt werden.

Der Schnellspannverschluss 49 ist mit einem ersten Abschnitt 50 fest mit der ersten Halterung 38 verbunden. Über einen zu diesem verschwenkbaren Spannhebel 52 wird der Bügel 36 zu der ersten Halterung 38 verspannt und somit durch den Spannhebel 52 des Schnellspannverschlusses 49 fixiert. Insbesondere in dem Spannhebel 52 ist ein Kraftsensor 54 integriert, um somit die Kraft bzw. den Druck messen zu können, mit der die Siegelbacke 34 der Schweißeinrichtung 32 an dem Formatrohr 10 anliegt.

Bei dem Schnellspannverschluss 49 kann es sich um einen solchen handeln, wie dieser von Heinrich Kipp Werke GmbH und Co KG, Sulz am Neckar, Deutschland, unter der Bezeichnung Schnellspanner angeboten wird.

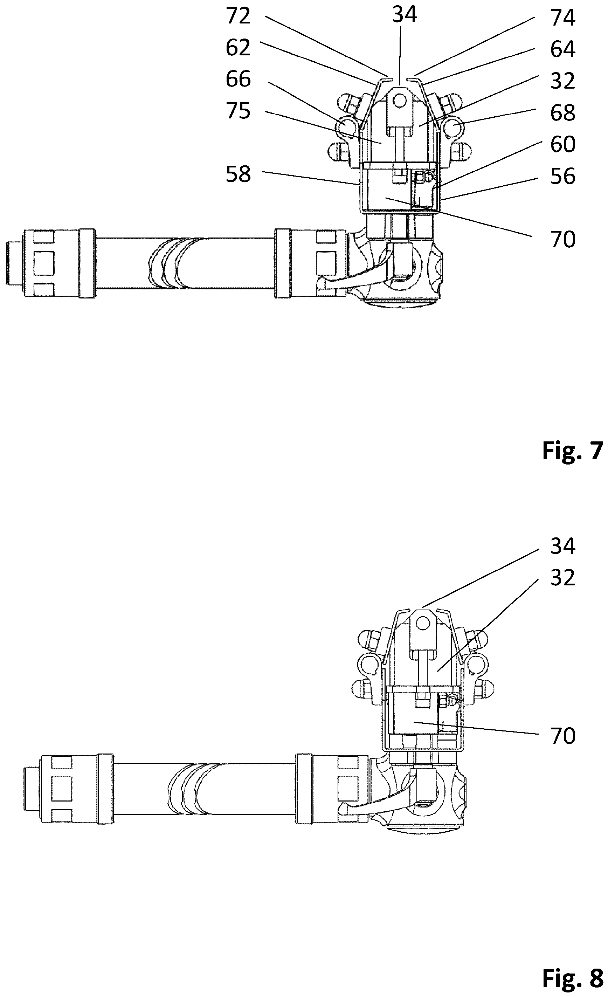

Die Schweißeinrichtung 32 weist ein Schutzgehäuse 56 auf, das Seitenwandungen 58, 60 und von diesen ausgehende und zu diesem verschwenkbare Schutzklappen 62, 64 besitzt, die mit den Seitenwandungen 58, 60 über Federscharniere 66, 68 verbunden sind. Das Schutzgehäuse 56 z.B. ist mittels einer Kolbenstange eines Pneumatikzylinders 70 zu der Siegelbacke 34 verstellbar, wie sich aus einem Vergleich der Fig. 7 und 8 ergibt. Der Pneumatikzylinder 70 ist fest mit der Schweißeinrichtung 32 verbunden.

In der Fig. 7 ist die Schweißeinrichtung 32 in einer Position dargestellt, in der sich die Schweißeinrichtung 32 beabstandet zu dem Formatrohr 10 befindet. In dieser Position ist das Schutzgehäuse 56 in Richtung der Siegelbacke 34 derart verstellt, dass die abgewinkelten und einander zugewandten Randabschnitte 72, 74 der Schutzklappen 62, 64 vor der Siegelbacke 34 positioniert sind, so dass diese und damit die Siegelfläche geschützt ist. Die Kolbenstange des Zylinders 70 ist in dieser Position eingefahren. Soll die Siegelbacke 34 und damit die Siegelfläche an dem Formatrohr 10 bzw. an den zu schweißenden Folien angelegt werden und sodann anliegen, so wird die Kolbenstange des Zylinders 70 ausgefahren mit der Folge, dass das Schutzgehäuse 56 zurückgezogen und die Schutzklappen 62, 64 entlang den Seitenwandungen der die Siegelbacke 34 aufweisenden Siegelbackenhalterung 75 mit der Folge gleitend bewegt wird, dass aufgrund der Federscharniere 66, 68 ein Auseinanderklappen der Schutzklappen 62, 64 beim Zurückziehen des Schutzgehäuses 56 erfolgt und somit die Siegelbacke 34 freigegeben wird, wie der Fig. 8 zu entnehmen ist.

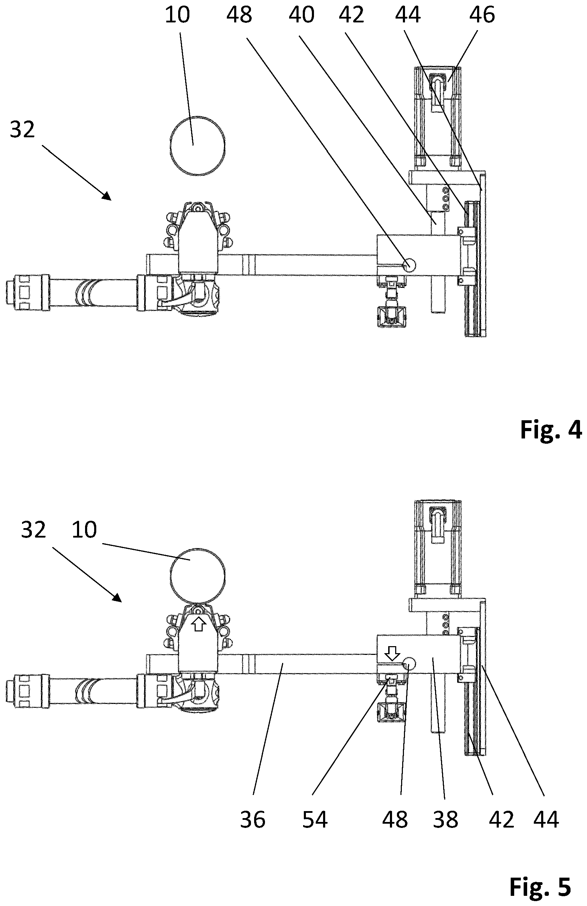

In den Fig. 4 und 5 ist die Schweißeinrichtung 32 in Parkposition (Fig.4) bzw. in der Position dargestellt, in der die Siegelbacke 34 an dem Formatrohr 10 anliegt, wobei zwischen der Siegelbacke 34 und dem Formatrohr 10 der zu verschweißende Folienschlauch gezogen wird.

Durch die Pfeile in Fig. 5 wird die Kraft symbolisiert, die auf die Siegelbacke 34 und somit auf den Schnellspannverschlusses 49 einwirkt, der die Schweißeinrichtung 32, und zwar im Ausführungsbeispiel über das Verbindungselement in Form des Bügels 36, mit der ersten Halterung 38 verbindet. Die Kraft bzw. der Druck wird mittels des im Spannstück bzw. Spannhebel 52 integrierten Sensors 54 gemessen.

Erfolgt die Kraft- bzw. die Druckmessung nicht in einem Schnellspannverschluss so können z.B. auch eine oder mehrere Dehnungsmesstreifen benutzt werden, um überprüfen zu können, ob die Siegelbacke 34 mit der erforderlichen Kraft bzw. dem Druck auf die zu verschweißenden Folien einwirkt bzw. ob solche überhaupt zwischen Siegelbacke 34 und Formatrohr 10 vorhanden sind. Der bzw. die Dehnungsmessstreifen verlaufen im Verbindungsbereich zwischen der Schweißeinrichtung 32 bzw. dem Verbindungselement 36 und der ersten Halterung 38.

Ein händisches Einstellen der Siegelbacke 34 zum Formatrohr 10 ist nicht erforderlich. Vielmehr kann ein automatisches Zustellen mit definierter Krafteinwirkung auf die zu verschweißenden Folienränder erfolgen.

Eine automatische Bestimmung des Formatrohrdurchmessers kann durch die Position der ersten Halterung 38 in der zweiten Halterung 44 ermittelt werden, da die zweite Halterung 44 in ortsfester Beziehung zur Längsachse des Formatrohrs 10 steht.

Sollte während des Schweißens z.B. ein Reißen der Folie erfolgen, wird dies festgestellt, da eine Änderung des auf das Formatrohr 10 einwirkenden Drucks mittels des Kraftsensors feststellbar ist.

Bevorzugterweise wird über die Siegelfläche der Siegelbacke 34 eine Kraft K mit 0 N < K ≤ 100 N, insbesondere 10 N ≤ K ≤ 50 N, besonders bevorzugt 15 N ≤ K ≤ 30 N, auf die zu verschweißenden bzw. zu versiegelnden sich überlappenden Folien übertragen.

Die Erfindung zeichnet sich aus durch eine Einrichtung einer Vorrichtung zum Verschweißen bzw. Versiegeln von Schlauchbeuteln, umfassend eine auf ein Formatrohr 10 der Vorrichtung anlegbare Schweißeinrichtung 32, wie Längssiegelschweißeinrichtung, sowie eine erste Halterung 38 für diese, wobei der ersten Halterung 38 oder einem die Schweißeinrichtung mit der ersten Halterung verbindenden Verbindungselement 36 ein zur Messung der auf die Halterung bzw. das Verbindungselement einwirkenden Kraft bestimmbarer Sensor 54 zugeordnet ist.

Auch zeichnet sich die Erfindung dadurch aus, dass die Schweißeinrichtung 32 oder ein von der Schweißeinrichtung ausgehendes Verbindungselement 36 mit der ersten Halterung 38 verbunden ist, dass zwischen der Schweißeinrichtung oder dem Verbindungselement und der ersten Halterung ein Sensor 54 zur Messung der auf die erste Halterung oder das Verbindungselement einwirkenden Kraft vorhanden ist, wobei insbesondere die Schweißeinrichtung oder das Verbindungselement über eine den Sensor 54 aufweisende Schnellspannvorrichtung mit Spannstück 52 verbunden ist.

Auch zeichnet sich die Erfindung dadurch aus, dass zum Verstellen der ersten Halterung 38 diese mit einem Linearantrieb 40 verbunden ist, und dass der ersten Halterung 38 oder einem die Schweißeinrichtung mit der ersten Halterung verbindenden Verbindungselement 36 ein zur Messung der auf die Halterung oder das Verbindungselement einwirkenden Kraft bestimmbarer Sensor 54 zugeordnet ist.

Auch zeichnet sich die Erfindung dadurch aus, dass die erste Halterung 38 über einen Linearantrieb 40 verstellbar ausgebildet ist.

Auch zeichnet sich die Erfindung dadurch aus, dass der Linearantrieb 40 von einer zweiten Halterung 44 ausgeht, die in ortsfester Beziehung zu dem Formatrohr 10 steht.

Auch zeichnet sich die Erfindung dadurch aus, dass der Sensor 54 in dem Spannstück integriert ist.

Auch zeichnet sich die Erfindung dadurch aus, dass der Sensor zumindest ein Dehnungsmessstreifen ist oder enthält.

Auch zeichnet sich die Erfindung dadurch aus, dass die Schweißeinrichtung 32, ggf. über das Verbindungselement 36, mit der ersten Halterung 38 verschwenkbar verbunden ist.

Auch zeichnet sich die Erfindung dadurch aus, dass die Schweißeinrichtung 32 eine langgestreckte Siegelbacke 34 aufweist, und dass zu beiden Seiten der Siegelbacke in Längsrichtung dieser ein Schutzelement 62, 64 wie -klappe verläuft.

Auch zeichnet sich die Erfindung dadurch aus, dass zum Freigeben der Siegelbacke 34 das Schutzelement 62, 64 sowohl schwenkbar als auch translatorisch bewegbar ausgebildet ist.

Auch zeichnet sich die Erfindung dadurch aus, dass der Siegelbacke 34 ein Seitenwandungen 58, 60 aufweisendes Schutzgehäuse 56 zugeordnet ist, dass jeweils ein Schutzelement 62, 64 mit einer der Seitenwandungen verbunden ist, und dass das Schutzgehäuse über einen Antrieb 70, wie Pneumatikzylinder, relativ zu der Siegelbacke verstellbar, wie zurückziehbar, ausgebildet ist, wobei beim Verstellen, wie dem Zurückziehen, die Schutzelemente zum Freigeben der Siegelbacke voneinander weg verschwenkbar ausgebildet sind.

Die Erfindung zeichnet sich auch aus durch ein Verfahren zum Überprüfen der Wirkfunktion einer Siegelbacke 34 einer Schweißeinrichtung 32 in Bezug auf ein Formatrohr 10 einer vertikalen Schlauchbeutelmaschine, wobei die Schweißeinrichtung mit einer ersten Halterung 38 verbunden ist, mittels der die Siegelbacke zu dem Formatrohr verstellt wird, wobei auf ein die Schweißeinrichtung 32 mit der ersten Halterung 38 verbindendes Verbindungselement 36 oder die erste Halterung einwirkende Kraft mittels eines Sensors 54 ermittelt wird und in Abhängigkeit von der ermittelten Kraft die Wirkfunktion der Siegelbacke 34 bewertet wird.

Auch zeichnet sich die Erfindung dadurch aus, dass das Verbindungselement 36 über einen den Sensor 54 aufweisenden Schnellspannverschluss 49 mit der ersten Halterung 38 verbunden wird.

Auch zeichnet sich die Erfindung dadurch aus, dass die erste Halterung 38 über einen Linearantrieb 40, wie Spindel, zu dem Formatrohr 10 verstellt wird.

Auch zeichnet sich die Erfindung dadurch aus, dass in Abhängigkeit von der gemessenen Kraft bzw. dem Druck die Siegelbacke 34 zu dem Formatrohr 10 verstellt und bei Anliegen an dem Formatrohr die über die Siegelbacke auf das Formatrohr einwirkende Kraft bzw. der Druck gemessen und auf einen Sollwert eingestellt wird.

Auch zeichnet sich die Erfindung dadurch aus, dass bei Anliegen der Siegelbacke 34 an dem Formatrohr 10 die Position der Siegelbacke in Bezug auf Mittelachse des Formatrohrs durch die Position der ersten Halterung 38 in der zweiten Halterung 44 ermittelt wird.

Auch zeichnet sich die Erfindung dadurch aus, dass von dem Sensor 54 generierte kraft- bzw. druckabhängige Signale einer Steuerung zugeführt werden, mittels der die Position der Siegelbacke 34 zu dem Formatrohr 10 und/oder Position der Schweißeinrichtung in Bezug auf die erste Halterung 38 und/oder bei an dem Formatrohr anliegender Siegelbacke fehlerhaft zugeführtes oder zumindest teilweise fehlendes zu schweißendes Folienmaterial ermittelt werden.

## Patentansprüche

1. Einrichtung einer Vorrichtung zum Verschweißen bzw. Versiegeln von Schlauchbeuteln, umfassend eine auf ein Formatrohr (10) der Vorrichtung anlegbare Schweißeinrichtung (32), wie Längssiegelschweißeinrichtung, sowie eine erste Halterung (38) für diese,
**dadurch gekennzeichnet,**
**dass** die Schweißeinrichtung (32) oder ein von der Schweißeinrichtung ausgehendes Verbindungselement (36) mit der ersten Halterung (38) verbunden ist, dass zwischen der Schweißeinrichtung oder dem Verbindungselement und der ersten Halterung ein Sensor (54) zur Messung der auf die erste Halterung oder das Verbindungselement einwirkenden Kraft vorhanden ist, wobei die Schweißeinrichtung oder das Verbindungselement insbesondere über eine den Sensor (54) aufweisende Schnellspannvorrichtung mit Spannstück (52) verbunden ist.

2. Einrichtung nach Anspruch 1,
**dadurch gekennzeichnet,**
**dass** die erste Halterung (38) über einen Linearantrieb (40) verstellbar ausgebildet ist.

3. Einrichtung nach zumindest Anspruch 1 oder 2,
**dadurch gekennzeichnet,**
**dass** der Linearantrieb (40) von einer zweiten Halterung (44) ausgeht, die in ortsfester Beziehung zu dem Formatrohr (10) steht.

4. Einrichtung nach vorzugsweise zumindest einem der vorhergehenden Ansprüche,
**dadurch gekennzeichnet,**
**dass** der Sensor (54) in dem Spannstück integriert ist.

5. Einrichtung nach vorzugsweise zumindest einem der vorhergehenden Ansprüche,
**dadurch gekennzeichnet,**
**dass** der Sensor zumindest ein Dehnungsmessstreifen ist oder enthält.

6. Einrichtung nach zumindest einem der vorhergehenden Ansprüche,
**dadurch gekennzeichnet,**
**dass** die Schweißeinrichtung (32), ggf. über das Verbindungselement (36), mit der ersten Halterung (38) verschwenkbar verbunden ist.

7. Einrichtung nach vorzugsweise zumindest einem der vorhergehenden Ansprüche, **dadurch gekennzeichnet,**
**dass** die Schweißeinrichtung (32) eine langgestreckte Siegelbacke (34) aufweist, und dass zu beiden Seiten der Siegelbacke in Längsrichtung dieser ein Schutzelement (62, 64) wie -klappe verläuft.

8. Einrichtung nach zumindest einem der vorhergehenden Ansprüche,
**dadurch gekennzeichnet,**
**dass** zum Freigeben der Siegelbacke (34) das Schutzelement (62, 64) sowohl schwenkbar als auch translatorisch bewegbar ausgebildet ist.

9. Einrichtung nach zumindest einem der vorhergehenden Ansprüche,
**dadurch gekennzeichnet,**
**dass** der Siegelbacke (34) ein Seitenwandungen (58, 60) aufweisendes Schutzgehäuse (56) zugeordnet ist, dass jeweils ein Schutzelement (62, 64) mit einer der Seitenwandungen verbunden ist, und dass das Schutzgehäuse über einen Antrieb (70), wie Pneumatikzylinder, relativ zu der Siegelbacke verstellbar, wie zurückziehbar, ausgebildet ist, wobei beim Verstellen, wie dem Zurückziehen, die Schutzelemente zum Freigeben der Siegelbacke voneinander weg verschwenkbar ausgebildet sind.

10. Verfahren zum Überprüfen der Wirkfunktion einer Siegelbacke (34) einer Schweißeinrichtung (32) in Bezug auf ein Formatrohr (10) einer vertikalen Schlauchbeutelmaschine, wobei die Schweißeinrichtung mit einer ersten Halterung (38) verbunden ist, mittels der die Siegelbacke zu dem Formatrohr verstellt wird,
**dadurch gekennzeichnet,**
**dass** auf ein die Schweißeinrichtung (32) mit der ersten Halterung (38) verbindendes Verbindungselement (36) oder die erste Halterung einwirkende Kraft mittels eines Sensors (54) ermittelt wird und in Abhängigkeit von der ermittelten Kraft die Wirkfunktion der Siegelbacke (34) bewertet wird.

11. Verfahren nach Anspruch 10,
**dadurch gekennzeichnet,**
**dass** das Verbindungselement (36) über einen den Sensor (54) aufweisenden Schnellspannverschluss (49) mit der ersten Halterung (38) verbunden wird.

12. Verfahren nach Anspruch 10,
**dadurch gekennzeichnet,**
**dass** die erste Halterung (38) über einen Linearantrieb (40), wie Spindel, zu dem Formatrohr (10) verstellt wird.

13. Verfahren nach zumindest einem der Ansprüche 10 bis 12,
**dadurch gekennzeichnet,**
**dass** in Abhängigkeit von der gemessenen Kraft bzw. dem Druck die Siegelbacke (34) zu dem Formatrohr (10) verstellt und bei Anliegen an dem Formatrohr die über die Siegelbacke auf das Formatrohr einwirkende Kraft bzw. der Druck gemessen und auf einen Sollwert eingestellt wird.

14. Verfahren nach zumindest einem der Ansprüche 10 bis 13,
**dadurch gekennzeichnet,**
**dass** bei Anliegen der Siegelbacke (34) an dem Formatrohr (10) die Position der Siegelbacke in Bezug auf Mittelachse des Formatrohrs durch die Position der ersten Halterung (38) in der zweiten Halterung (44) ermittelt wird.

15. Verfahren nach zumindest einem der Ansprüche 10 bis 14,
**dadurch gekennzeichnet,**
**dass** von dem Sensor (54) generierte kraft- bzw. druckabhängige Signale einer Steuerung zugeführt werden, mittels der die Position der Siegelbacke (34) zu dem Formatrohr (10) und/oder Position der Schweißeinrichtung in Bezug auf die erste Halterung (38) und/oder bei an dem Formatrohr anliegender Siegelbacke fehlerhaft zugeführtes oder zumindest teilweise fehlendes zu schweißendes Folienmaterial ermittelt werden.
